Europäisches Patentamt

European Patent Office

Office européen des brevets

(11) Publication number: **0 372 080**
**A1**

## EUROPEAN PATENT APPLICATION
### published in accordance with Art. 158(3) EPC

(21) Application number: 89902075.4

(22) Date of filing: 03.02.89

(86) International application number:
PCT/JP89/00115

(87) International publication number:
WO 89/11515 (30.11.89 89/28)

(51) Int. Cl.⁵: C09J 7/02, B42D 15/02

(30) Priority: 23.05.88 JP 125582/88

(43) Date of publication of application:
13.06.90 Bulletin 90/24

(84) Designated Contracting States:
BE LU NL

(71) Applicant: DAIMATSU KAGAKU KOGYO CO.,
LTD.
2-1, Obase-cho, Tennoji-ku
Osaka-shi, Osaka 543(JP)

(72) Inventor: MATSUGUCHI, Noboru
4-12-3, Yamate-cho
Suita-shi Osaka-fu 564(JP)
Inventor: MATSUGUCHI, Tadashi
20-5, Maruyama-cho
Suita-shi Osaka-fu 564(JP)

(74) Representative: Smulders, Theodorus A.H.J.,
Ir.
Vereenigde Octrooibureaux Nieuwe Parklaan
107
NL-2587 BP 's-Gravenhage(NL)

(54) **ADHESIVE MEMBER.**

(57) An adhesion member is disclosed, which comprises a base material having formed on the main surface thereof a thermally adhesive resin layer, with an adhesion-inhibiting resin layer being partly formed on said thermally adhesive resin layer so as to decrease adhesion force of the adhesive resin layer. When the member is applied under heating to a substance to be adhered by the adhesion member, the adhesion member is completely adhered to the substance where the thermally adhesive resin is laid bare, and is comparatively weakly adhered where the adhesion-inhibiting layer is formed. Hence, the adhesive member can be comparatively easily peeled apart from the substance where the adhesion-inhibiting layer is formed, thus various informations formed on the main surface of the substance being obtained.

DESCRIPTION

(TITLE OF INVENTION)

Sticking Material

Technical Field

The present invention relates to a sticking material. Principally, the present invention relates to a sticking material for partial and temporary adhesion which is preferably used as the sticking material diveded into a portion adhered completely to a material to be sticked and a portion adhered weakly thereto, whereby, for example, a portion provided with confidential matters is covered temporarily and if necessary, the portion adhered weakly is peeled off from the material to be sticked for access to the confidential portion.

Background Art

Conventionally, as seen in Japanese Utility Model Patent Publication No. 54-3789, a laminate material which can be peeled off partly has been developed. The laminate material is formed as such that an inner-frame portion can be peeled off partially.

However, in order to facilitate peeling partially, one laminate of the laminate structure must be possible to peel off partially.

In the laminate of aforesaid Japanese Utility Model Patent Publication No. 54-3789, the adhesive surface is formed by coating a non-dry paste entirely on the paper surface, and the other base material is subjected to a peeling agent coating process such as silicon processing so as to be peeled off partially or only the inner-frame portion is peeled off. Thus, in the prior art laminate, since the non-dry paste must be coated on one laminate and the peeling agent coating process such as silicon processing must be performed on the other in manufacturing, structures of the laminate structure become complicated and results in a high manufacturing cast due to many manufacturing processes.

Disclosure of Invention

Therefore, it is a principal object of the present invention to provide a sticking material, in which surface treatment of the material to be sticked is not required and only by post-processing of the sticking material, a portion which is possible to be peeled off partly and a portion which is adhered completely are divided so as to be used in various purposes complying with the users' needs.

The present invention is directed to a sticker in which a heat adherent resin layer is formed on the main surface of a base material, and an adhesion retarding layer is formed on the main surface of the heat adherent resin layer whose adhesive power is reduced partly to weaken its adhesiveness to the material to be sticked.

The above and other objects, features and advantages of the present invention will be more apparent from the following detailed description taken in connection with the accompanying drawings.

Brief Description of Drawings

Fig. 1 is a perspective view of a sticking material for partial and temporary adhesion of one embodiment of the present invention.

Fig. 2 is a partially sectional view of the embodiment.

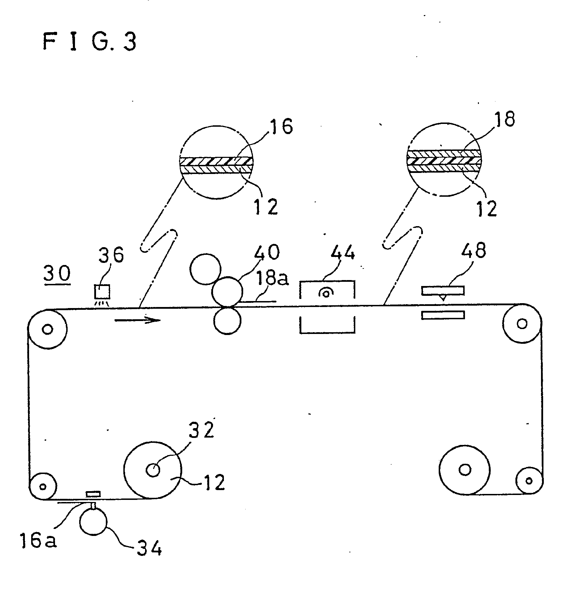

Fig. 3 is a diagrammatical view of a manufacturing machine showing one example of manufacturing precess of the embodiment.

Fig. 4A is a surface view of continuous form onto which sticking materials of one embodiment of the present invention are sticked, and Fig. 4B is a backside view thereof.

Figs. 5A and 5B are partially sectional views of the above embodiment.

Fig. 6 is a perspective view showing one example of a sticking material.

Fig. 7 is a perspective view generally showing a adhesion machine of sticking materials.

Figs. 8A and 8B are diagrammatical views of an adhesive portion transfer unit.

Fig. 9 is a perspective view showing an essential portion of a sticking material transfer unit.

Fig. 10A is a perspective view showing around a sticking material cutter on the downstream side of the unit shown in Fig. 9, and Fig. 10B is a diagrammatical view showing an essential portion on the backside of the sticking material cutter.

Fig. 11A is a perspective view showing an essential portion of a pressing and heating unit, and Fig. 11B is a diagrammatical view showing an essential portion of its backside.

Fig. 12 is a view showing a time chart of the adhesion machine shown in Fig. 7.

Best Mode for Carrying Out the Invention

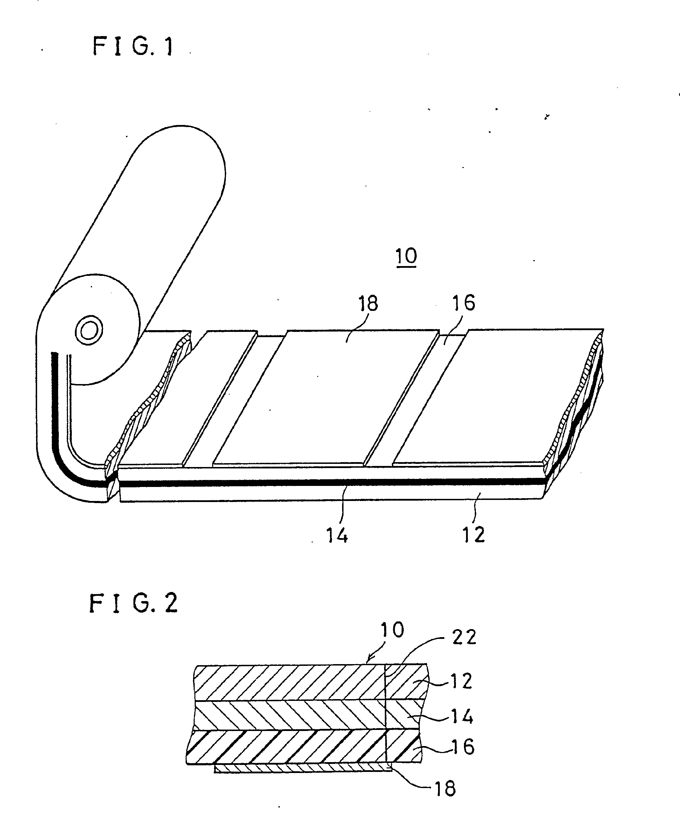

Fig. 1 is a perspective view showing a portion of stiking material for partial and temporary adhesion according to the present invention.

Fig. 2 is a partially sectional view thereof.

The sticking material 10 for partial and temporary adhesion includes a rolled base material 12.

The base material 12 is formed with a relatively soft material such as paper, synthetic resin film and the like which can be cut by a scissors or the like, and a suppression layer 14 is formed on one main surface thereof.

The suppression layer 14 is formed by printing a silver ink and the like or laminating a film material such as an aluminum foil having a suppressiveness with adhesives.

On the surface of the suppression layer 14, a heat adherent resin layer 16 is formed by coating the heat adherent resin as heating and extruding it, or by gravure or silk screen printing as dissolving it in a solvent or dispersing in water.

The heat adherent resin layer 16 is formed to melt at about 100°C to 200°C so as to be adhered completely to a material to be sticked such as the paper.

On the main surface of the heat adherent resin layer 16, an adhesion retarding layer 18 which reduces its adhesive strength partly to weaken adhesiveness to the material to be sticked is formed partly.

The adhesion retarding layer 18 is formed by printing and coating a suitably selected resin which, when the heat adherent resin layer 16 is heated and melted, had adhesiveness only at the temperature higher than the non-adherent resin or the resin selected as the heat adherent resin forming the heat adherent resin layer 16.

As an example of adherent resin, adhesives of EVA group may be selected. The composition comprises an EVA (ethylene-vinyl acetate copolymerized resin), tackifier, wax and anti-oxidant, to which sometimes a plasticizer and filler are added as an adjuvant.

As the tackifier there are glycerin of partially hydrogenated rosin, glycerin-ester of rosin, pentaerythritol modified rosin, petroleum resin, $\alpha$-methylstyrene/vinyl toluene copolymer, terpene oil polymer and terpene-phenol polymer, etc.

As the wax, there are paraffin wax, microcrystalline wax, low molecular weight polyethylene wax, Fischer-Tropsch wax, caster wax and chlorinated paraffin, etc.

As the anti-oxidant, there are hindered phenol group compound, salicylic acid group compound, benzophenone group compound, benzotriazol group compound, phosphorus group compound, sulfur group compound, organic metal group compound, etc.

As the adherent resins other than the aforesaid examples, there are polyethylene, ethylene-ethylacrylate copolymerized resin, ethylene-acrylic acid copolymerized resin, ethylene-methyl acrylate copolymerized resin, ethylene-methyl methacrylate, ethylene-methacrylic acid copolymerized resin, ionomer resin, polymethylpentene resin, ethylene-vinylalcohol copolymerized resin, vinylidene chloride resin, vinyl chloride-vinyl acetate copolymerized resin, polyamide resin, stylene-acrylic acid copolymerized resin, polystylene resin, polyacrylic acid copolymerized resin, polyester resin, polyurethane resin, waxes, etc. When printing and coating, these resins can be suitably used as heating or dissolving in a solvent or dispersing in water.

As an example of adhesion retarding layer 18, materials which show adhesiveness at the higher temperature than the heat adherent resin or not at all may be selected.

For example, an ultraviolet ray curing ink may be selected. The ultraviolet hardening ink comprises a color material, pre-polymer, monomer, light initiator, sensitizer and additives. As the pre-polymer, there are epoxy acrylate, polyolacrylate, polyester acrylate, polyether acrylate, unsaturated polyester, cationic polymerizing resin, melamine acrylate, unsaturated polybutadiene, drying oil acrylate and silicon acrylate.

As the monomer, there are monofunctional acrylates such as 2-ethyl acrylate, 2-hydroxyethyl acrylate, 2-hidroxypropyl acrylate and 2-hydroxyethyl methacrylate, and bifunctional acrylates such as 1, 3-butanediol diacrylate, 1, 4-butanediol diacrylate, 1, 6-hexanediol diacrylate, diethylene glycol diacrylate, neopentilglycol diacrylate, polyethylene glycol #400 diacrylate, hydroxybivalic acid ester neobenzyl glycol diacrylate, diethylene glycol dimethacrylate and polyethylene glycol #200 dimethacrylate, etc. and multifunctional acrylates such as trimethylolpropane triacrylate, pentaerythritol triacrylate, trimethylolpropane trimethacrylate, trimethylolethane trimethacrylate, tetramethylolmethane tetraacrylate, dipentaerythritol hexaacrylate, etc. In addition vinyl ether, itaconic acid ester and N-vinyl pyrolidone may be used.

As the light initiators, there are biacetyl, acetophenone, benzophenone, Michler's ketone, benzyl, benzoin, benzoin isobutyl ether, benzyl dimethylketal, tetramethylthiuram sulfide, azobisisobutylnitrile, benzoyl peroxide, 1-hydroxycyclohexilphenyl ketone, $\alpha$-hydroxyisobutyl phenone, p-isopropyl-$\alpha$-hydroxyisobutyl phenone, etc., in particular, benzophenone and its derivatives are used.

As the sensitizers, there are aliphatic amines such as n-butyl amine, di-n-butyl amine, triethyl amine, diethylaminoethyl methacrylate, etc., nitrogen heterocyclic compounds such as amines containing aromatic radical, piperizine, etc. sulfur compounds such as allyl group, O-tolylthiourea, sodium diethyldithiophosphate, soluble salt of aromatic sulfinic acid, etc., phosphorus compounds such as N, N-disubstituent-p-aminobenzonitrile compound, tri-n-butyl phosphine, sodium diethylthiophosphate, etc. and nitrogene compounds such as Michler's ketone, N-nitrosophydroxylamine derivatives, oxazoline compound, etc. and chlorine compounds such as carbon tetrachloride, hexachloroethane, etc.

As the additives, there are an anti-mist agent, lubricant, anti-oxidant, drying agent, wetting agent, wax, etc.

As the color materials, there are an organic pigment, body pigment, carbon black, titanium dioxide, metal powder, etc.

Next, a method of manufacturing the sticking material for partial and temporary adhesion will be explained.

First, paper forming the base material 12 is prepared and on one main surface thereof, the suppression layer 14 is formed by allover printing with a silver ink, for example, by the known printing method as the offset printing or coating.

A rolled laminate comprising the base material 12 formed with the suppression layer 14 is then mounted on a hold roller 32 of a sticking material manufacturing machine 30.

The base material 12 held by the hold roller 32 is loosen at one end and led to a heat adherent resin coater 34.

The heat adherent resin coater 34 is designed to print and coat the heat adherent resin 16a containing, for example, the aforesaid ethylene-vinyl acetate copolymerized resin as a main component, on the suppression layer 14 of the base material 12 while heating to a suitable temperature.

The base material 12 onto which the heat adherent resin 16a is printed and coated is then guided to a dryer 36 including a cold air blower, whereby the heat adherent resin 16a is dried and the heat adherent resin layer 16 is formed.

Next, the base material 12 formed with the heat adherent resin layer 16 is directed to a printing and coating unit 40 of an adhesion retarding agent 18a.

The coating unit 40 is the printing or coating machine utilizing known printing and coating methods such as a typographic printing, gravure printing, silk screen printing, offset printing or the like.

When printing and coating the ultraviolet ray curing ink, for example, the typographic printing machine is selected and 4 to 6 $g/m^2$ of ultraviolet ray curing ink is coated.

The base material 12 onto which the adhesion retarding agent 18a is printed or coated is led to a solidifier 44. As the solidifier 44 in the present embodiment, a high voltage mercury lamp is used to irradiate 160 W/cm per second.

The sticking material 10 for partial and temporary adhesion thus formed with the suppression layer 14, heat adherent resin layer 16 and adhesion retarding layer 18 on the base material 12 is rolled again.

The sticking material 10 may be led to a perforator 48 for cutting perforations for separation, thereby forming the perforations 22 at a prescribed distance.

A method of using the sticking material 10 will be explained on the basis of continuous forms 50 formed by adhering the sticking material 10 to a continuous raw paper 52 as a covering material.

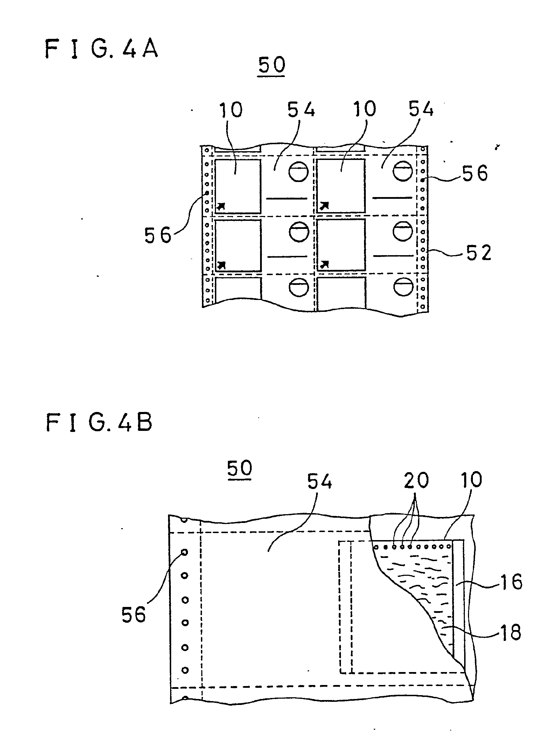

Fig. 4A is a surface view of the continuous forms onto which sticking materials of one embodiment of the present invention are adhered, and Fig. 4B is a backside view thereof.

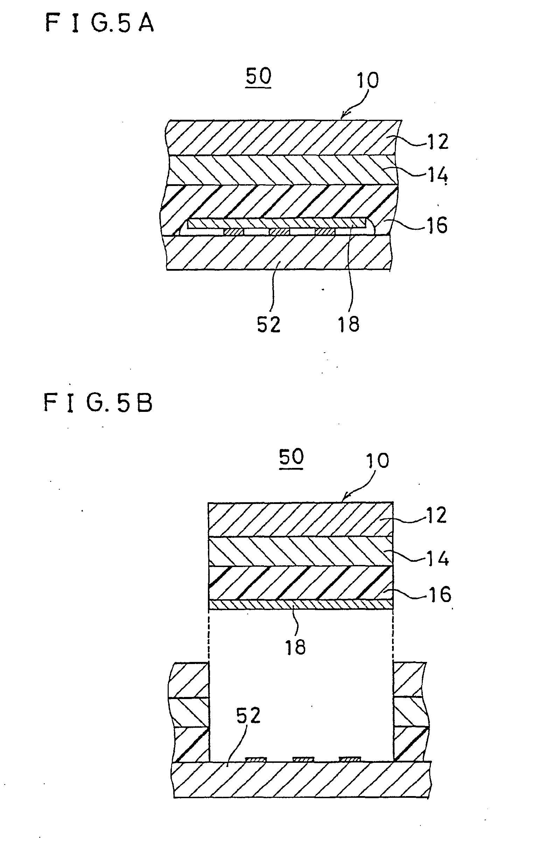

Fig. 5A and 5B are partially sectional views of the above embodiment.

The continuous raw paper 52, as shown in Figs. 4A and 4B, is formed separably into single pieces 54 which are formed in a suitable size. That is, on boundary lines of each single piece 54, perforations are formed suitably to form each single piece 54, and at opposite ends of the continuous raw paper 52, sprocket holes 56 are formed continuously at a suitable distance.

In the present invention, as the continuous raw paper 52, thin materials such as synthetic paper and other synthetic resin sheets and the like are used besides the typical paper.

The heat adherent resin layer 16 is formed to melt, for example, at 100°C to 200°C and to adhere completely to the continuous raw paper 52.

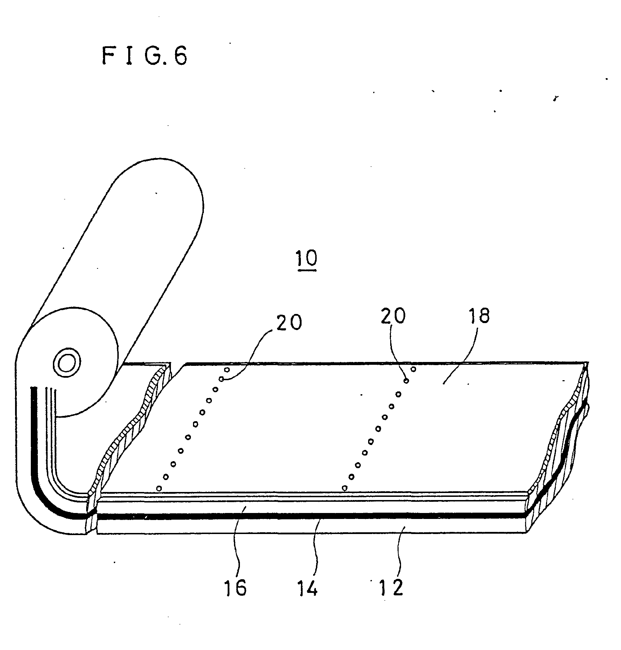

Meanwhile, the sticking material 10 is formed in a continuous sheet 10a as shown in Fig. 6 and on the heat adherent resin layer 16, the adhesion retarding layer 18 which partially reduces the adhesive strength of the heat adherent resin layer 16 to weaken the adhesiveness to the material to be sticked is formed partially, but in the present embodiment, spaces of prescribed width are remained on opposite ends of the sticking material 10 to form the adhesion retarding layer 18.

Moreover, at the front end of sticking material 10 in the breadthwise direction of the continuous paper 52, exposed spots 20 where the adhesion retarding layer 18 is not formed are present to expose the heat adherent resin layer 16 in spots. Thus, adhesion takes place weaker at the portion where the adhesion retarding layer 18 is formed and stronger at the portion where not formed.

Though the exposed spots 20 are formed at the front end of the sticking material 10, they may be formed on both the front and rear ends or on either end. Moreover, the portion formed on the other end of the sticking material 10 where the heat adherent resin layer 16 is exposed totally by a fixed width may be used in place of the exposed spots 20.

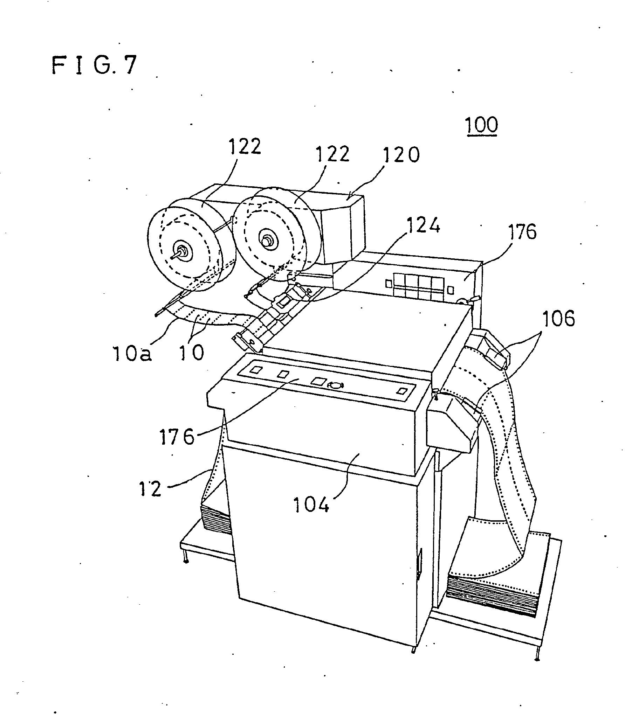

Next, a method of adhering the sticking material 10 to the surface of said continuous raw paper 52 will be explained on the basis of an adhesion machine shown in Fig. 7 through Fig. 12.

The adhesion machine 100 of the sticking material comprises a continuous paper transfer unit 102 which is designed to feed the continuous raw paper 52 to the position where the sticking material 10 is adhered.

The continuous paper transfer unit 102 includes transfer sprockets 106 formed substantially on opposite ends of the adhesion machine body 104, and an adhesive portion transfer device 108 which is formed substantially in the center of the adhesion machine body 104 to transfer the continuous raw paper 52 in the transferring direction by a suitable distance which, in the present embodiment, corresponds to the length of a sheet of sticking material 10 sticked to the single piece 54. The transfer sprockets 106 which are designed to rotate belts formed with projections which engage to the sprocket holes 56 of the continuous raw paper 52, successively engage the projections to the sprocket holes 56 to transfer the continuous raw paper 52.

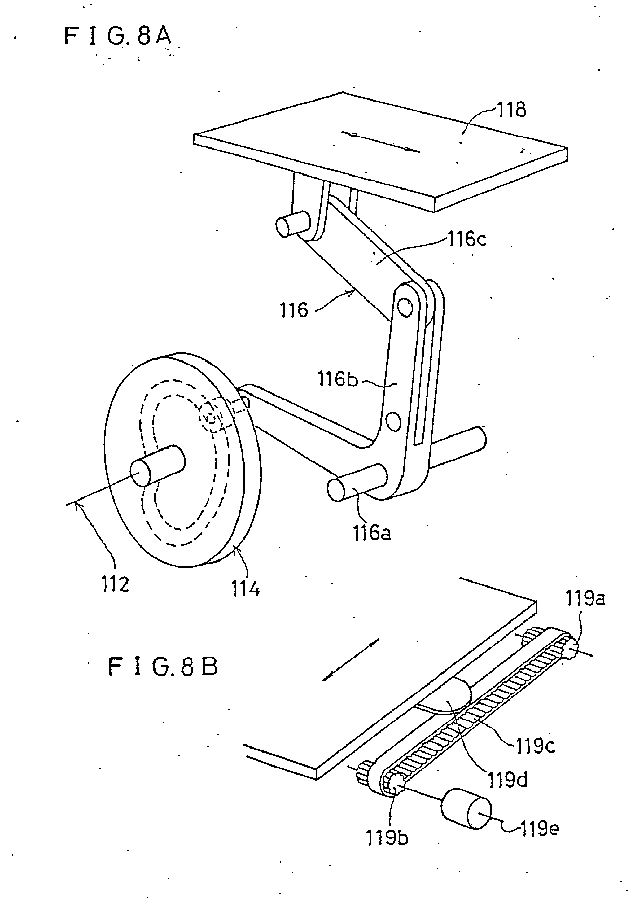

The adhesive portion transfer device 108, as shown in Fig. 8A, includes a continuous paper transfer cum 114 secured to a shaft 112 disposed across the front and rear of the adhesion machine body 104. And a suitable groove is formed in the body of continuous paper transfer cum 114 which gives suitable vertical and front-to-back movements to a link mechanism 116 by its uniform rotation. By the action of the link mechanism 116, an adhesive portion transfer table 118 fixed to the link mechanism 116 is moved back and forth continuously or intermittently. That is, the link mechanism 116 includes a link 116b which is fixed rockably to the adhesion machine body 104 with a pivot shaft 116a and a link 116c fixed rotatably to the adhesive portion transfer table 118, and the link 116b is pivotally fixed to the link 116c. The adhesive portion transfer table 118 is moved back and forth through the link mechanism 116 by rotation of the continuous paper transfer cum 114.

The amount of continuous raw paper 52 transferred in the continuous paper transfer unit 102, as shown in Fig. 8B, is detected by a synchronizing device 119. That is, a portion of the adhesive portion transfer table 118 is connected to a timing belt 119c mounted between timing pullies 119a and 119b provided at the front and rear of the adhesion machine body 104 by a connecting piece 119d, thereby the transferring distance of the adhesive portion transfer table 118 is detected by a pulse signal from an encoder 119e coupled to the timing pully 119b to control the rotation of a pulse motor which is a drive source formed on the continous paper transfer unit 102 for the overall control.

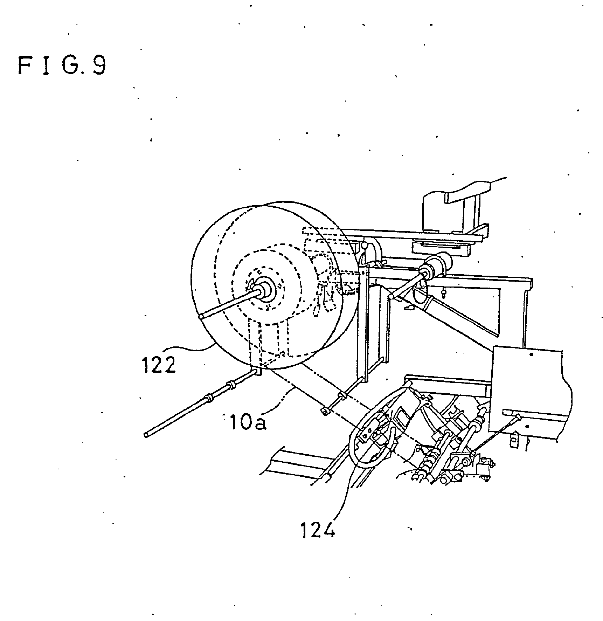

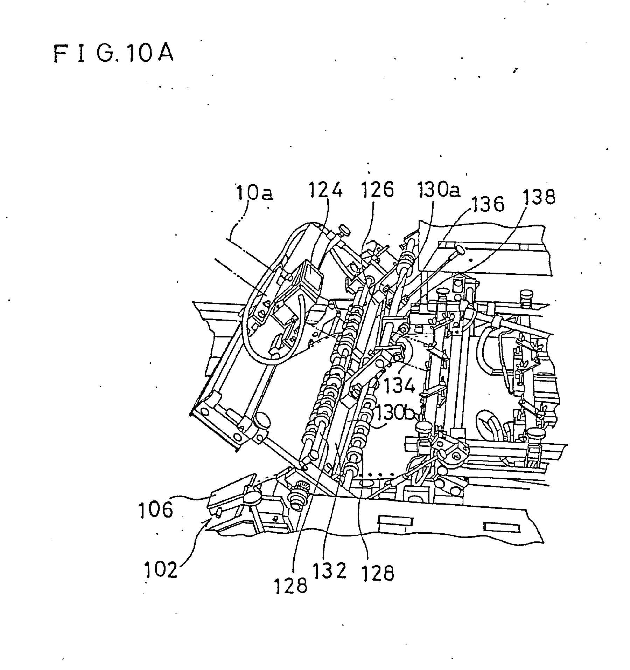

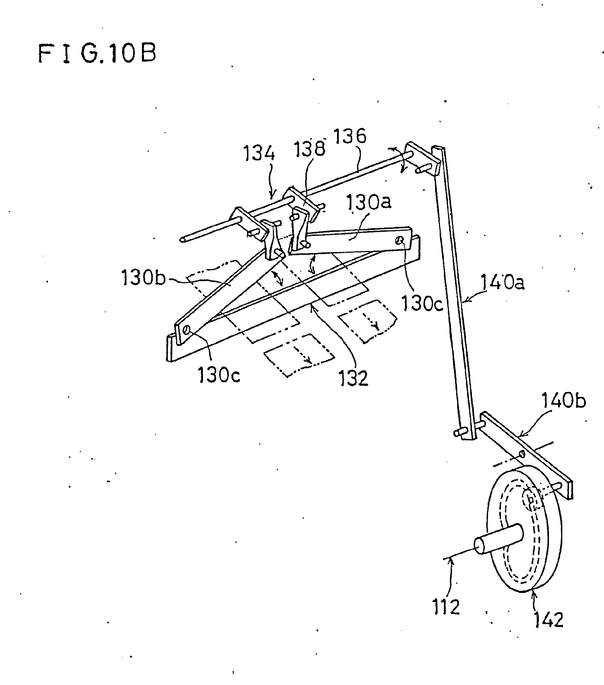

Next, a transfer unit of the sticking material 10 which is adhered to the surface of the continuous raw paper 52 fed successively by the continuous paper transfer unit 102 will be explained with reference to Fig. 9, Fig. 10A and Fig. 10B.

The sticking material transfer unit 120 includes a reel 122 whereon the rolled continuous sheet 10a of the sticking material continuously formed by the sticking material 10 is mounted, a sticking material detector 124 which detects the transferring amount of the continuous sheet 10a pulled out from the reel 122 and the arrival of the continuous sheet 10a at a specified position to output the electrical signal to a controller of the sticking material transfer unit 120, and a sticking material cutter 126 which is disposed on the downstream side from said sticking material detector 124 to cut the continuous sheet 10a into a suitable length.

In the sticking material transfer unit 120, at the front and rear of the sticking material cutter 126 which cuts the continuous sheet 10a, a pair of sticking material carries 128 comprising rubber rings fixed to a shaft and rotatable as contacting each other are disposed.

The continuous sheet 10a of the sticking materials clamped between the rings of the pair of sticking material carriers 128 is carried to the suitable position on the surface of the continuous raw paper 52 by the rotation of the sticking material carriers 128.

The sticking material cutter 126 includes cutter blades 130a and 130b. The cutter blades 130a and 130b are fixed to the cutter body 132 pivotally about pivot axes 130c at one end and to a link mechanism 134 at the other end (refer to Figs. 10A and 10B).

The link mechanism 134 is fixed pivotally to a cutter shaft 136 fixed pivotally to the cutter body 132 through a fixed piece 138, and the cutter shaft 136 is connected to a disc 142 formed with a cum groove through links 140a and 140b as shown in Fig. 10B. The disc 142 is fixed to the shaft 112 which secures the continuous paper transfer cum 114.

Accordingly, as the disc 142 rotates the cutter shaft 136 is rotated by the action of cum groove formed in the disc 142 through the links 140a and 140b, thereby the cutter blades 130a and 130b are pivoted about the pivot axes 130c fixed to the cutter body 132 to cut the continuous sheet 10a of the sticking materials into the suitable size.

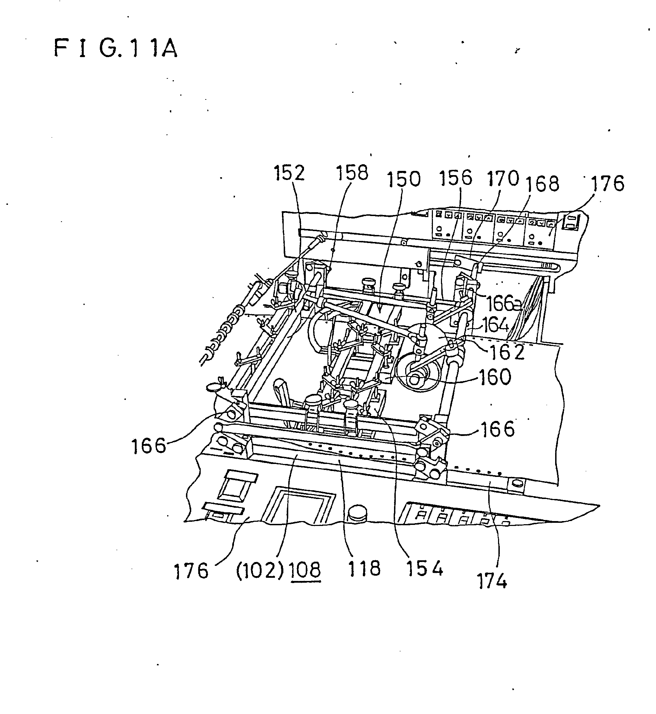

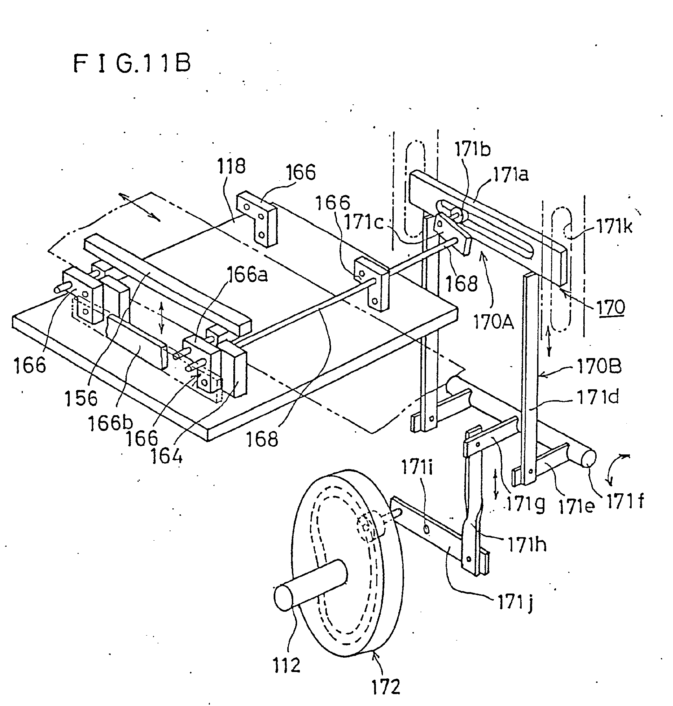

Next, a pressing and heating unit 150 which adheres the sticking material 10 to the continuous raw paper 52 will be explained with reference to Figs. 11A and 11B.

In the embodiment, the pressing and heating unit 150 includes a linear pressing and heating device 152 which presses the front end of the continuous sheet 10a of the sticking materials linearly in the breadthwise direction of the continuous raw paper 52 to adhere it primarily thereto, and a flat pressing and heating device 154 which adheres the sticking material 10 sticked to the continuous raw paper 52 at its front end by the linear pressing and heating device 152 to the continuous raw paper 52.

The pressing and heating unit 150 includes a square-frame transfer pedestal 156. To the transfer pedestal 156, a linear heater 158 forming the linear pressing and heating device 152 and a plate heater 160 forming the flat pressing and heating device 154 are secured. The plate heater 160 has substantially the same area as the sticking material 10.

Furthermore, in the present embodiment, a press roller 162 is fixed pivotally to the transfer pedestal 156. The press roller 162 is designed to press the sticking material 10 adhered to the continuous raw paper 52 by the plate heater 160 to ensure close adhesion. The transfer pedestal 156 onto which the linear heater 158 and flat heater 160 are mounted is fixed movably above the adhesive portion transfer table 118, thereby the continuous raw paper 52 is transferred between the linear heater 158, plate heater 160 and press roller 162 and the adhesive portion transfer table 118. The transfer pedestal 156 is designed to advance back and forth together with the adhesive portion transfer table 118 along the transferring direction of the continuous raw paper 52.

The transfer pedestal 156 is fixed to a support 164 secured upwardly at the side of adhesive portion transfer table 118 through a link mechanism 166 movably vertically such that the linear heater 158 and plate heater 160 can be attached to the adhesive portion transfer table 118 and detached from it.

That is, an approximately L-shaped link 166a of the link mechanism 166 is fixed pivotally to the transfer pedestal 156 at one end, and to the support 164 pivotally at its center by a shaft 168. A pair of same link mechanisms 166 on the upstream and downstream sides are connected by a turnbuckle 166b at the other end of the link 166a so as to operate similarly. The shaft 168 is fixed pivotally to the support 164, thereby the transfer pedestal 156 is moved vertically together with the linear heater 158 and plate heater 160.

The shaft 168 is connected to a disc 172 formed with a cum groove through another link mechanism 170 disposed at one end. The disc 172 fixed to the shaft 112 to which the continuous paper transfer cum 114 and disc 142 are secured.

The link mechanism 170 includes a rocking and straight moving link mechanism 170A constituted by a guide 171a provided with a slot in the center, a rotor 171b which moves in the slot while rotating and a link 171c connecting the shaft 168 and the rotor 171b. Additionally, the link mechanism 170 includes a vertically moving link mechanism 170B which moves the guide 171a vertically and constituted by a link 171d connected to the guide 171a, a link 171e fixed pivotally to the link 171d, another link 171g connected to the other end of the link 171e through a pivot shaft 171f, link 171h connected pivotally to the link 171g and a link 171j connected to the link 171h at its one end and fixed to the adhesion machine body 104 by a pivot axis 171i.

By the action of cum groove formed in the disc 172, the vertically moving link mechanism 170B is actuated, and by the action of the link mechamism 170B the guide 171a moves up and down in a slot 171k formed vertically in the adhesion machine body 104, thereby the link 171c of the rocking and straight moving link mechanism 170A is rocked, rotating the shaft 168 at a suitable angle to move the transfer pedestal 156 vertically by the action of another link mechanism 166 previously described.

In the embodiment, though the linear heater 158 and plate heater 160 are secured integrally to the transfer pedestal 156, they are each controlled by temperature controllers (not shown) separately to keep suitable temperatures.

Reason for controlling the heater temperature separately is to enabling a delicate adjustment depending upon characteristics or the like of the heat adherent resin layer 16 formed on the sticking material 10.

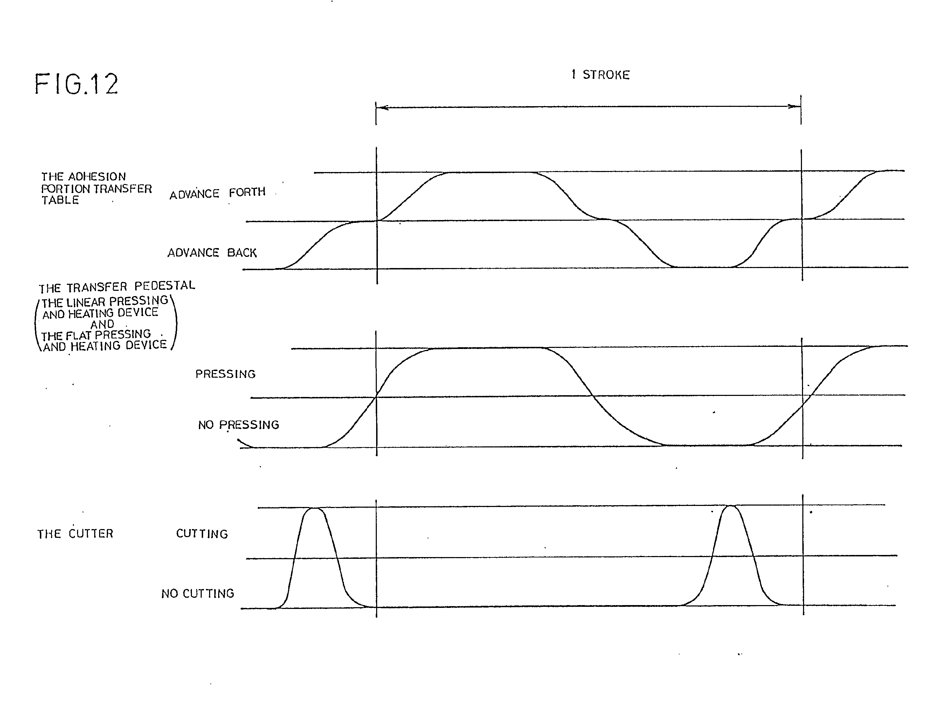

Now, operating conditions of the adhesion machine of the covering material will be explained with reference to time charts shown in Fig. 12.

A prescribed amount of continuous raw paper 52 is transferred by the transfer sprockets 106 of the continuous paper transfer unit 102.

The adhesive portion transfer table 118, in the present embodiment, is moved from the downstream side to the upstream side of the continuous raw paper 52.

While, as the continuous sheet 10a of the sticking material is transferred from the reel 122 by the sticking material transfer unit 120, the sticking material detector 124 detects a detecting mark, an arrow in this embodiment, formed on the continuous sheet 10a of the sticking material, and by the detecting signal of the sticking material detector 124 the continuous sheet 10a is stopped temporarily as well as the adhesive portion transfer table 118. At this time, the sticking material cutter 126 is actuated and the cutter blades 130a and 130b cut the continuous sheet 10a of the sticking material into a suitable size, that is, a sheet of sticking material 10 by the action of cum groove in the disc 142.

The front end of the sticking material 10 cut into the suitable size by the sticking material cutter 126 is positioned at the optimum location on the continuous raw paper 52, pressed and heated linearly in the breadthwise direction of the continuous raw paper 52 by the lineal pressing and heating device 152 forming the pressing and heating unit 150 to stick primarily to the continuous raw paper 52.

Then, simultaneously with pressing and heating, the continuous raw paper 52 is transferred by a fixed distance, corresponding approximately to the length of the sticking material 10 in this embodiment, to the downstream side by the action of continuous paper transfer unit 102. That is, simultaneously with pressing and heating of the sticking material 10 which were positioned under the flat pressing and heating device 154 in the previous cycle, the sticking material 10 is transferred by the prescribed distance as the continuous raw paper 52 moves to the downstream side.

After the adhesive portion transfer table 118 has moved by a prescribed amount on rails 174, the lineal pressing and heating device 152 and flat pressing ahd heating device 154 are again detached from the adhesive portion transfer table 118 by the action of cum groove in the disc 172 and positioned thereabove. At the same time, the lineal pressing and heating device 152 and flat pressing and heating device 154 are moved together with the adhesive portion transfer table 118 inversely to the flaw of continuous raw paper 52, or to the prescribed position on the original upstream side. At this time, the press roller 162 presses the sticking material 10 while rotating.

Then, at the front end position of the following sticking material 10 transferred in the next cycle through cutting and other processes of the continuous sheet 10a of the sticking materials, the adhesive portion transfer table 118 and the linear pressing and heating device 152 and flat pressing and heating device 154 forming the pressing and heating unit 150 are reengaged. At this time, the sticking material 10 transferred in the previous cycle is positioned under the flat pressing and heating device 154. The continuous raw paper 52 adhered with the front end of the sticking material 10 of the next cycle is transferred by a prescribed distance by the action of the continuous paper transfer unit 102, and the same time the front sticking material 10 transferred previously in the earlier cycle is pressed and heated by the flat pressing and heating device 154.

That is, when the sticking material 10 adhered at its front end is positioned under the flat pressing and heating device 154, initial upstream position, which is pressed to the surface of the adhesive portion transfer table 118 by the action of cum groove formed in the disc 172 to press and heat the sticking material 10.

Meanwhile, the transferring distance of the continuous raw paper 52 is restricted by a pulse sent from the encoder disposed on the continuous paper transfer unit 102, and transfer of the sticking material transfer unit 120, sticking material cutter 126 and pressing and heating unit 150 is controlled by a central processing unit 176. However, the continuous raw paper 52 is designed not to advance reversely in response to the backward movement of the adhesive portion transfer table 118 and the linear pressing and heating device 152 and flat pressing and heating device 154 of the pressing and heating 150.

The pressing and heating unit 150 thus repeats a cycle of forward movement, reflection point (downstream side), backward movement and reflection point (upstream side), and the sticking material 10 is adhered suitably to the surface of single piece 54 constituting the continuous paper 50 as shown in Fig. 4A.

The continuous paper 50 thus covered with the sticking material 10 partly is folded suitably before separated.

The continuous paper 50 onto which the sticking materials are adhered is sticked strongly to the single piece 54 at the exposed portion of the heat adherent resin layer 16, and at the portion where the adhesion retarding layer 18 is formed the heat adherent resin layer 16 of the bottom layer is sticked weakly. Thus, as shown in Fig. 5B. the sticking material 10 can be peeled off relatively easily from the single piece 54 at the portion where the adhesion retarding layer 18 is formed.

As the example of base material 12, besides the aforesaid example, there are films of synthetic paper, cellophane, polyethylene, polyester, etc. or an aluminum foil and the like. However, relatively soft materials are preferably selected as the base material 12 such that when the sticking material 10 is adhered to the material to be sticked, it will not come off easily therefrom against the adhesivestrength of the heat adherent resin layer 16 by the adhesive retarding layer 18 formed.

When the aluminum foil and the like having a good suppression is selected as the base material 12, the suppression layer 14 is not necessary as the aforesaid embodiment.

Though the rolled continuous paper is selected as the base material 12 in the foregoing embodiment, the base material separated into each piece, so-called, sheets may be selected.

Also, on the base material 12, any suitable printing which fits to properties of the material to be sticked may be performed, or when the continuous material is used as the aforesaid embodiment, for example, a detecting mask for detecting feeding pitches of the base material 12 may be printed with a black color or the like.

Although the present invention has been particularly described and illustrated in the drawings, it is to be understood that such description is for illustrative purpose only and not restrictive. The spirit and scope of the present invention is, therefore, to be determined solely by the appended claims.

Industrial Applicability

According to the present invention, since the adhesive surface to the material to be sticked is divided into the exposed portion of the heat adherent resin layer and the adhesion retarding layer which reduces the adhesive strength of the heat adherent resin layer to weaken its adhesiveness to the material to be sticked, when heated and adhered thereto, the exposed portion of the heat adherent resin layer is adhered strongly to the material to be sticked, whereas the portion formed with the adhesion retarding layer is adhered more weakly thereto.

Accordingly, the sticking material can be peeled off relatively from the material to be sticked at the portion of adhesion retarding layer, thereby enabling access to various information formed on the material to be sticked.

Moreover, according to the present invention, since a sticked substance divided into the portion adhered temporarily and the portion adhered completely can be obtained by using the sticking material of the present invention without processing the material to be sticked, only heat processing is required on the users' side, enabling broad applications.

Besides, the sticking material is just needed to be processed somewhat in manufacturing and the material to be sticked is not necessary to be processed, so that its manufacturing process as well as a sticking machine on the users' side can be simplified with ease.

CLAIMS

1. A sticking material comprising a base material formed with a heat adherent resin layer on its main surface, whereon an adhesion retarding layer which reduces the adhesive force of said heat adherent resin layer to weaken adhesiveness to a meterial to be sticked is formed.

2. A sticking material as recited in claim 1, wherein a base material is constituted by long rolled paper.

3. A sticking material as recited in claim 1, wherein a heat adherent resin layer is constituted by coating a heat adherent resin entirely on one main surface of a base material.

4. A sticking material as recited in claim 1, which further comprises a suppression layer formed on a base material on the side where a heat adherent resin layer is formed.

5. A sticking material as recited in claim 4, wherein said suppression layer is constituted by printing and coating a silver ink.

6. A sticking material as recited in claim 4, wherein said suppression layer is constituted by laminating aluminum foils.

7. A sticking material as recited in claim 1, wherein an adhesion retarding layer is constituted by printing and coating an ultraviolet hardening ink.

FIG. 1

FIG. 2

# F I G. 3

# F I G. 4A

<u>50</u>

10    54    10    54

56

56

52

# F I G. 4B

<u>50</u>    54    20    10

56

16

18

# F I G.5A

# F I G.5B

F I G. 6

# F I G. 7

F I G. 8 A

F I G. 8 B

F I G. 9

122

10a

124

F I G.10 A

FIG.10B

# FIG.11A

EP 0 372 080 A1

F I G.11B

# FIG.12

1 STROKE

THE ADHESION
PORTION TRANSFER
TABLE

ADVANCE FORTH

ADVANCE BACK

THE TRANSFER PEDESTAL
(THE LINEAR PRESSING
AND HEATING DEVICE
AND
THE FLAT PRESSING
AND HEATING DEVICE)

PRESSING

NO PRESSING

THE CUTTER

CUTTING

NO CUTTING

EP 0 372 080 A1

# INTERNATIONAL SEARCH REPORT

International Application No PCT/JP89/00115

## I. CLASSIFICATION OF SUBJECT MATTER (if several classification symbols apply, indicate all) [6]

According to International Patent Classification (IPC) or to both National Classification and IPC

Int. Cl$^4$ C09J7/02, B42D15/02

## II. FIELDS SEARCHED

### Minimum Documentation Searched [7]

| Classification System | Classification Symbols |
|---|---|
| IPC | C09J7/02, B42D15/02 |

### Documentation Searched other than Minimum Documentation to the Extent that such Documents are Included in the Fields Searched [8]

| | |
|---|---|
| Jitsuyo Shinan Koho | 1951 - 1988 |
| Kokai Jitsuyo Shinan Koho | 1971 - 1988 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| Y | JP, Y2, 54-3789 (Computer Printing Kabushiki Kaisha) 21 February 1979 (21. 02. 79) Scope of Claim for Utility Model Registration and page 1, right column, lines 27 to 34 (Family: none) | 1-7 |
| Y | JP, U, 63-21069 (Sayama Kako Kabushiki Kaisha) 12 February 1988 (12. 02. 88) & Utility Model Application No. 114292/ 1986 no Gansho ni tenpushita Scope of Claim for Utility Model Registration (Specification), page 5, line 13 to page 6, line 11 and page 7, line 9 to page 9, line 8 o satsueishita Microfilm 12 February 1988 (12. 02. 88) Japanese Patent Office (Family: none) | 1-7 |
| Y | JP, U, 63-8982 (Ono Yoshio) 21 January 1988 (21. 01. 88) & Utility Model Application No. 103373/ | 1-7 |

* Special categories of cited documents: [10]

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 26, 1989 (26. 04. 89) | May 15, 1989 (15. 05. 89) |

| International Searching Authority | Signature of Authorized Officer |
|---|---|
| Japanese Patent Office | |

Form PCT/ISA/210 (second sheet) (January 1985)

| FURTHER INFORMATION CONTINUED FROM THE SECOND SHEET | | |
|---|---|---|
| | satsueishita Microfilm<br>30 October 1972 (30. 10. 72)<br>Japanese Patent Office (Family: none) | |
| Y | JP, U, 63-7148 (Naito Takehiko)<br>18 January 1988 (18. 01. 88)<br>& Utility Model Application No. 100920/<br>1986 no Gansho ni tenpushita Scope of<br>Claim for Utility Model Registration<br>(Specification) and Example 1 o<br>satsueishita Microfilm<br>18 January 1988 (18. 01. 88)<br>Japanese Patent Office (Family: none) | 1-7 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers ............, because they relate to subject matter not required to be searched by this Authority, namely:

2.☐ Claim numbers ............, because they relate to parts of the international application that do not comply with the prescribed requirements to such an extent that no meaningful international search can be carried out, specifically:

3.☐ Claim numbers ............, because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)